(19) Europäisches Patentamt
European Patent Office
Office européen des brevets

(11) EP 4 700 639 A1

(12) EUROPÄISCHE PATENTANMELDUNG

(43) Veröffentlichungstag:
25.02.2026  Patentblatt 2026/09

(21) Anmeldenummer: 24195162.3

(22) Anmeldetag: 19.08.2024

(51) Internationale Patentklassifikation (IPC):
$G06F\ 30/367^{(2020.01)}$     $G01R\ 31/52^{(2020.01)}$
$G01R\ 31/42^{(2006.01)}$     $H02H\ 3/16^{(2006.01)}$
$G06F\ 113/04^{(2020.01)}$     $G06F\ 119/02^{(2020.01)}$

(52) Gemeinsame Patentklassifikation (CPC):
**G06F 30/367; G01R 31/52;** G01R 31/42;
G06F 2113/04; G06F 2119/02; H02H 3/165

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(71) Anmelder: **Siemens Aktiengesellschaft**
**80333 München (DE)**

(72) Erfinder:
• **Schulze, Max**
**04938 Drasdo (DE)**
• **Schmidt, Uwe**
**01705 Freital (DE)**

(74) Vertreter: **Siemens Patent Attorneys**
**Postfach 22 16 34**
**80506 München (DE)**

(54) **BESTIMMEN EINER RICHTUNGSINFORMATION IN EINEM SCHWINGUNGSVERLAUF**

(57)   Es wird ein Verfahren zum Bestimmen einer Richtungsinformation bezüglich einem Schwingungsverlauf (100) beschrieben, das Verfahren aufweisend:
i) Definieren eines Zeitbereichs (110) des Schwingungsverlaufs (100);
ii) Bestimmen eines Nullsystemenergie-Verlaufs (120) bezüglich des Schwingungsverlaufs (100) in dem definierten Zeitbereich (110); und
iii) Evaluieren der Richtungsinformation bezüglich dem Schwingungsverlauf (100) basierend auf zumindest zwei Schwellwerten (130, 131) des Nullsystemenergie-Verlaufs (120) in dem definierten Zeitbereich (110).

FIG 4

EP 4 700 639 A1

**Beschreibung**

Technisches Gebiet

Die Erfindung bezieht sich auf ein Verfahren zum Bestimmen einer Richtungsinformation bezüglich einem Schwingungsverlauf (z.B. der Stromrichtung bzw. Fehlerstromrichtung bei einem Erdschluss), wobei das Verfahren aufweist: Definieren eines Zeitbereichs des Schwingungsverlaufs, Bestimmen eines Nullsystemenergie-Verlaufs bezüglich des Schwingungsverlaufs in dem definierten Zeitbereich, und Evaluieren der Richtungsinformation bezüglich dem Schwingungsverlauf basierend auf zumindest zwei Schwellwerten des Nullsystemenergie-Verlaufs in dem definierten Zeitbereich. Die Erfindung betrifft weiterhin eine Vorrichtung zur Datenverarbeitung und eine Energievorrichtung, welche die Vorrichtung zur Datenverarbeitung aufweist.

Die Erfindung kann sich somit auf das technische Gebiet des Evaluierens von Schwingungsverläufen beziehen, insbesondere in Hinblick auf Erdschlüsse bei einer Energieanwendung wie z.B. Resonanz-Sternpunkt-Erdung.

Technischer Hintergrund

Schwingungsverläufe kommen in einer Vielzahl technischer Anwendungen vor; praktisch in allen physikalischen Bereichen, sowohl im elektrischen als auch im mechanischen oder optischen Bereich. Entsprechend wichtig können Evaluierungen dieser Schwingungsverläufe für unterschiedlichste Applikationen sein, sei es z.B. für Effizienzsteigerung oder Betriebssicherheit. In einem Schwingungsverlauf können jedoch unerwartete bzw. anormale Ereignisse auftreten, welche dann evaluiert werden müssen. Insbesondere kann hierbei eine Richtungsinformation, wie z.B. eine Stromrichtung, von besonderer Bedeutung sein.

Im Folgenden wird das spezifische Beispiel einer Energieanwendung beschrieben, bei der die Richtung eines Fehlstroms bei einem Erdschluss bzw. einer Wiederzündung zu bestimmen ist. Jedoch ist eine Vielzahl weiterer Anwendungen des erfinderischen Prinzips denkbar und umsetzbar.

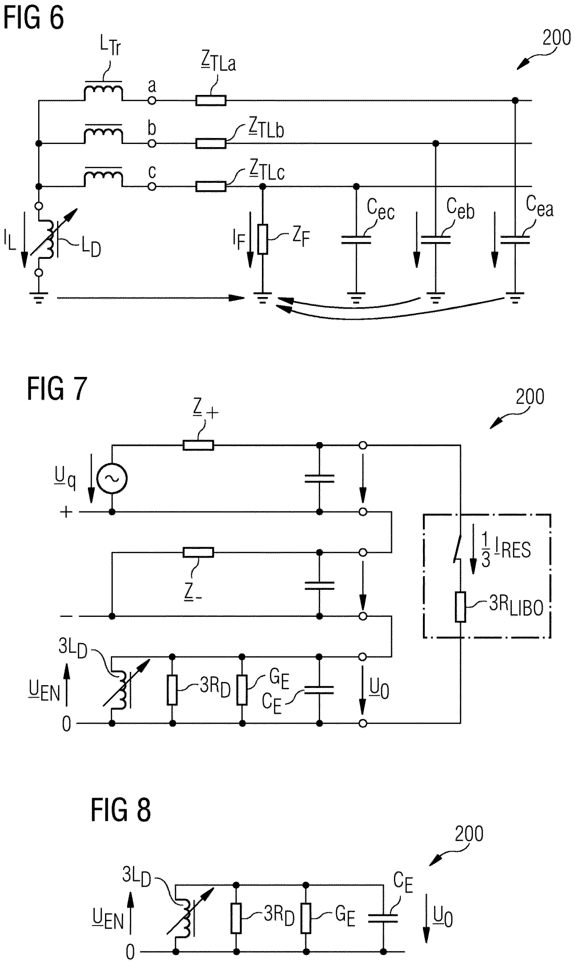

Ein Großteil der Fehler im Energieversorgungsnetz ist auf einpolige Fehler wie Erdschlüsse zurückzuführen. In nicht effektiv geerdeten Netzen mit Resonanz-Sternpunkt-Erdung (RESPE) bzw. Isoliertem Sternpunkt (OSPE) handelt es sich um Erdschlüsse, die zumeist einen Betrieb des fehlerbehafteten Netzes ermöglichen. Durch eine Löschspule im Sternpunkt eines bzw. mehrerer Transformatoren wird ein dem kapazitiven Erdschluss-Strom $I_{ce}$ entgegengesetzt wirkender induktiver Strom $I_L$ eingestellt. Es resultiert ein geringer Fehlerstrom, der die Berührungsspannungen an der Fehlerstelle begrenzt. Der Rest-Strom $I_{res}$ wird dabei wesentlich durch die Verstimmung und Dämpfung sowie harmonische Anteile bestimmt. Gleichzeitig treten in den intakten Leitern erhöhte Spannungen (quasistationär und transient) auf. **Figur 6** zeigt ein anschauliches Beispiel einer bekannte Resonanz-Sternpunkt-Erdung-Vorrichtung 200 bei einem solchen Erdschluss.

Eine geringe Spannung an der Fehlerstelle und ein geringer Fehlerstrom führen z.T. zum selbstständigen Erlöschen des Erdschlusses. Nach Verlöschen des Erdschlusses kehrt die Leiter-Erde-Spannung wieder. Der Erdschluss stellt sich hierbei als Isolationsdurchbruch zwischen Leiter und Erde dar. Das vollständige Isolationsvermögen kann meist aber nicht vollständig erreicht werden; stattdessen kann das Isolationsvermögen der Leiter-Erde-Isolation an der Fehlerstelle dauerhaft reduziert sein. Die wiederkehrende Leiter-Erde-Spannung nach Erdschluss kann das Isolationsvermögen der Fehlerstelle überschreiten, so dass ein erneuter Erdschluss-Eintritt (Wiederzündung) die Folge ist.

In Netzen mit RESPE bzw. OSPE tritt dieser Vorgang ggf. mehrmals auf und wird als intermittierender Erdschluss bezeichnet. Dieser wirkt bis zur Abschaltung oder bis der Fehler stationär wird. **Figur 7** zeigt anschaulich eine Ersatzschaltung eines intermittierenden Erdschlusses in einem symmetrischen Komponentensystem einer bekannten Resonanz-Sternpunkt-Erdung-Vorrichtung 200.

Ein Erdschlusseintritt kann z.B. drei Ausgleichsvorgänge bewirken:

- Entladevorgang der fehlerbehafteten Phase.
- Aufladevorgang der fehlerfreien Phasen,
- Spulenausgleichsvorgang.

Die Vorgänge können sich in allen Abgängen in Strom und Spannung auswirken. Nach Ende der Ausgleichsvorgänge kann der Erdschluss in einen stationären Fehler übergehen. Kommt es selbstständig oder durch Abschaltung zum Verlöschen des Erdschlusses, reduziert sich die Nullspannung über einen Ausgleichsvorgang. Die Schwingung des Resonanzkreises im Nullsystem kann für einen Erdschluss in Leiter a auf bekannte Weise beschrieben werden. **Figur 8** zeigt anschaulich einen Resonanzkreis in einem Nullsystem einer bekannten Resonanz-Sternpunkt-Erdung-Vorrichtung 200.

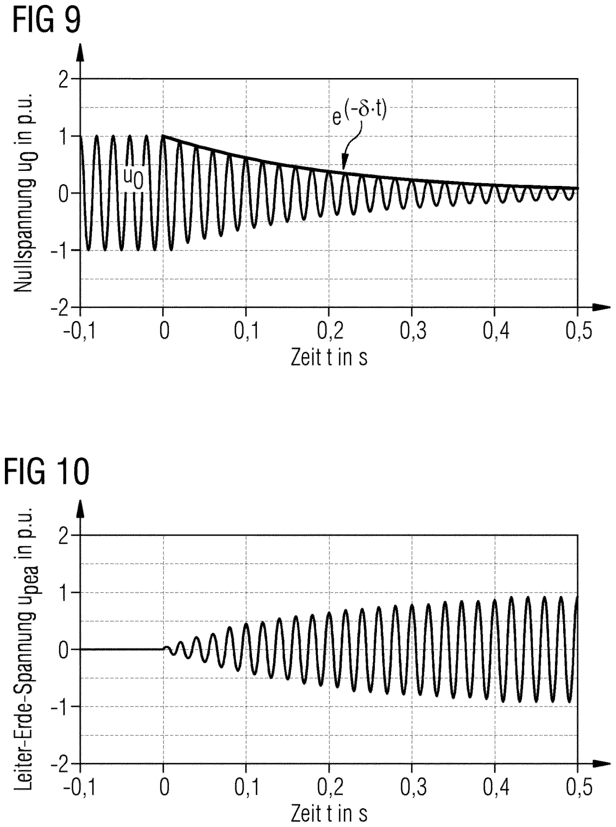

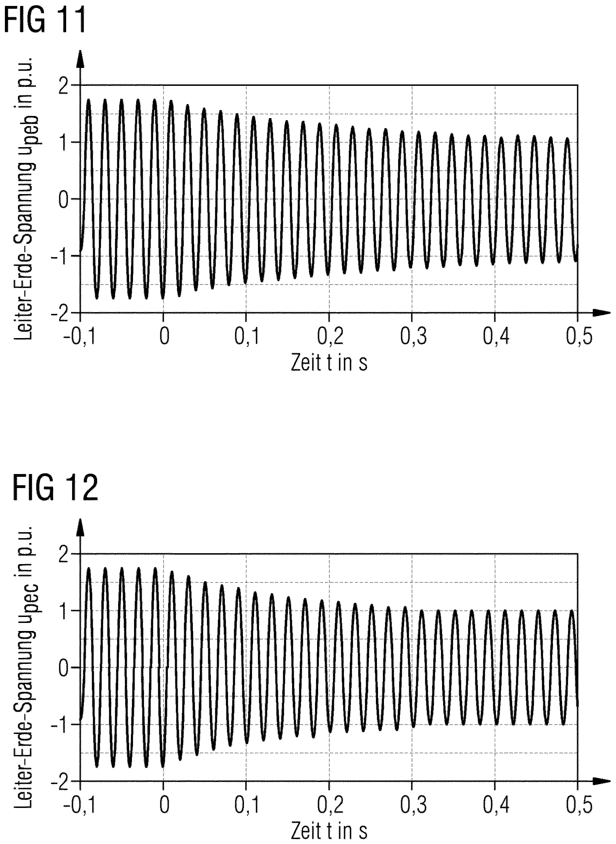

**Figur 9** zeigt einen Nullspannung-Schwingungsverlauf bei Verstimmung v = 1% und Dämpfung d = 3%. **Figuren 10 bis 12** zeigen das Verhalten einer Leiter-Erde-Spannung nach Verlöschen eines Erdschlusses bei Verstimmung v = 1% und Dämpfung d = 3%. Durch die gedämpfte Schwingung im Nullsystem wächst die Leiter-Erde-Spannung der fehlerbehafteten Phase langsam an. Die durchbrochene Isolationsstrecke kann sich ggf. wiederverfestigen. Dieser Effekt kann die Fehlerklärung in RESPE-Netzen begünstigen. Erlangt die Isolationsstrecke ihre volle Spannungsfestigkeit nicht wieder, führt die ansteigende Leiter-Erde-Spannung zu einer Wiederzündung. Bei mehrfacher Wiederzündung handelt es sich um einen intermittierenden Erdschluss.

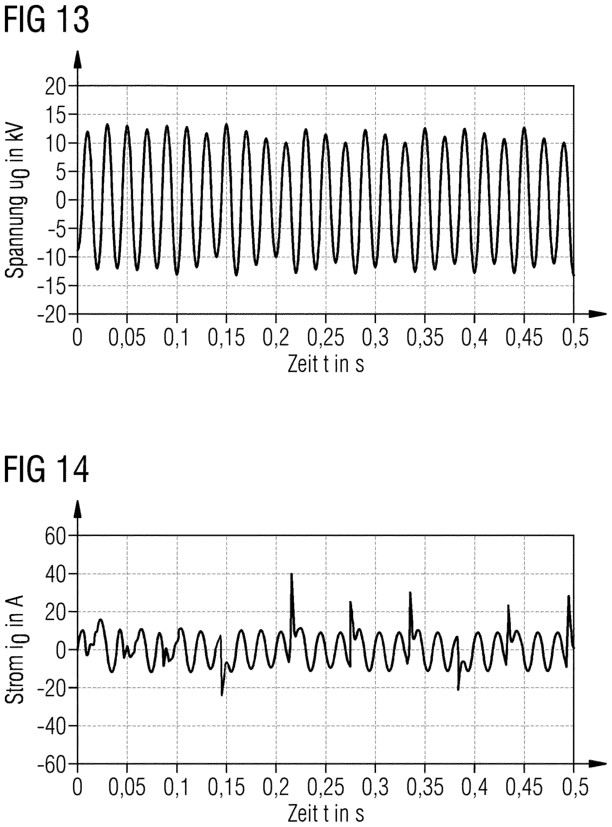

**Figur 13** zeigt einen Nullspannung-Schwingungsverlauf eines wiederzündenden Erdschlusses und **Figur 14** zeigt einen korrespondierenden Nullstrom-Schwingungsverlauf.

Zur Auswertung des Erdschlusses werden allgemein Strom und Spannung des Nullsystems im Augenblick des Erdschlusseintritts bzw. im stationären Fehlerzustand ausgewertet. Die Erfassung des Nullstromes erfolgt je Abgang z.B. direkt über eine Holmgreen-Schaltung oder einen Kabelumbau-Wandler. Die Nullspannung kann z.B. über eine offene Dreieckswicklung je Abgang, jedoch mindestens an der Sammelschiene, gemessen werden. Alternativ erfolgt die Ermittlung von Nullstrom und -Spannung z.B. über die bekannten Ausdrücke:

$$i_0 = 1/3 \, (i_a + i_b + i_c), \quad u_0 = 1/3 \, (u_a + u_b + u_c).$$

Jede Wiederzündung stellt für das Netz eine Spannungsbelastung dar, insbesondere für die am Fehler nicht beteiligten Leiter. Die Spannungsbelastung (Überspannung) kann im Verlauf des Fehlers zu Doppelerdschlüssen führen. Weiterhin kann an der Fehlerstelle eine mögliche Berührungsspannung resultieren, die zu einer Personengefährdung führen kann.

Um den aktiven Eingriff zu ermöglichen bzw. den fehlerbehafteten Abgang zu identifizieren, kann eine Richtungsinformation bezüglich dem Fehlstrom bei Erdschluss/Wiederzündung notwendig sein. Eine zuverlässige Ermittlung dieser Richtungsinformation kann jedoch herausfordernd sein.

Der intermittierende Erdschluss kann verschiedene Eigenschaften aufweisen, insbesondere in Hinblick auf die Zeitpunkte der Wiederzündungen. Erweiterte transiente Erdschluss-Richtungs-Erfassungen werten den initialen Erdschluss-Eintritt aus. Der weitere Verlauf wird nicht berücksichtigt. Stationäre Verfahren setzen hingegen einen dauernden Erdschluss voraus. Diese führen trotz z.T. intermittierender Erdschlüsse zur Auswertung, jedoch oftmals zur falschen Richtungsmeldung. Eine dauernde Anwendung erweiterter Wischer-Verfahren würde auch den temporären Ausschwingvorgang nach Verlöschen des Erdschlusses berücksichtigen und zu Fehlern führen.

Zusammenfassung der Erfindung

Es kann ein Bedarf bestehen, einen Schwingungsverlauf hinsichtlich einer Richtungsinformation (insbesondere bezüglich eines anomalen Ereignisses) effizient und zuverlässig zu evaluieren. Ein Verfahren, eine Vorrichtung zur Datenverarbeitung, und eine Energievorrichtung werden im Folgenden beschrieben.

Gemäß einem ersten Aspekt der Erfindung wird ein (insbesondere Computer-implementiertes) Verfahren zum Bestimmen einer Richtungsinformation bezüglich einem Schwingungsverlauf (z.B. ein elektrischer/mechanischer/optischer Schwingungsverlauf) beschrieben, das Verfahren aufweisend:

i) Definieren eines (bestimmten/spezifischen) Zeitbereichs (von dem) des Schwingungsverlaufs (insbesondere ein Zeitbereich in dem zumindest ein anomales Ereignis eintritt, z.B. ein Erdschluss/eine Wiederzündung);

ii) Bestimmen/Berechnen eines Nullsystemenergie-Verlaufs (z.B. aus einem Nullspannung-Schwingungsverlauf und einem Nullstrom-Schwingungsverlauf) bezüglich des (entsprechend dem) Schwingungsverlaufs in dem definierten Zeitbereich; und

iii) Evaluieren/Bestimmen der Richtungsinformation (z.B. vorwärts, rückwärts, etc.) bezüglich dem Schwingungsverlauf basierend auf zumindest zwei Schwellwerten (z.B. dem Betragsmaximum und dem Endwert) (insbesondere basierend auf den Vorzeichen der Schwellwerte) des Nullsystemenergie-Verlaufs in dem definierten Zeitbereich.

Gemäß einem zweiten Aspekt der Erfindung wird eine Vorrichtung zur Datenverarbeitung (z.B. ein oder mehr Prozessoren) beschrieben, die eingerichtet ist das Verfahren wie oben beschrieben (zumindest teilweise) auszuführen.

Gemäß einem dritten Aspekt der Erfindung wird eine Energievorrichtung beschrieben (z.B. eine Resonanz-Sternpunkt-Erdung-Vorrichtung), insbesondere aufweisend zumindest ein Schutzgerät, wobei die Energievorrichtung zumindest eine Vorrichtung zur Datenverarbeitung wie oben beschrieben aufweist.

Im vorliegenden Kontext kann der Begriff "Schwingungsverlauf" insbesondere darstellen, wie sich eine Schwingungsgröße im Laufe der Zeit verändert. Ein Schwingungsverlauf kann eine wiederholte/periodische zeitliche Schwankung der Schwingungsgröße darstellen und eine Mehrzahl von Schwellwerten wie Maxima und Minima aufweisen. Die Schwingungsgröße kann eine physikalische Größe sein, z.B. eine elektrische Größe wie Spannung, Strom, oder Energie. Die Schwingungsgröße kann auch eine mechanische Größe wie z.B. eine Feder sein. Fern kann die Schwingungsgröße auch eine optische Größe wie z.B. der Verlauf einer elektromagnetischen Welle sein.

Im vorliegenden Kontext kann der Begriff "Schwellwert" insbesondere einen Wert eines Schwingungsverlaufs bezeichnen, der per vorheriger Definition für die Evaluation der Richtungsinformation herangezogen werden kann bzw. geeignet ist. Ein Schwellwert kann z.B. ein Extremwert des Schwingungsverlaufs sein, z.B. ein Maximum oder ein Minimum, bzw. ein Scheitelwert. Ein Schwellwert kann insbesondere das Betragsmaximum eines Schwingungsverlaufs bezeichnen. Ferner kann ein Schwellwert aber auch der Anfangswert und/oder der Endwert eines Schwingungsverlaufs, insbesondere eines Nullsystemenergie-Verlaufs, in einem definierten Zeitbereich sein.

Gemäß einem exemplarischen Ausführungsbeispiel kann die Erfindung auf der Idee basieren, dass ein Schwingungsverlauf hinsichtlich einer Richtungsinformation (insbesondere bezüglich eines anomalen Ereignisses) effizient und zuverlässig evaluiert werden kann, wenn ein Zeitbereich des Schwingungsverlaufs definiert wird (der mit dem anomalen Ereignis assoziiert ist), ein Nullsystemenergie-Schwingungsverlauf für den definierten Zeitbereich bestimmt wird, und zumindest zwei Schwellwerte dieses Nullsystemenergie-Schwingungsverlaufs als Basis zum Evaluieren der Richtungsinformation verwendet werden.

Exemplarische Ausführungsbeispiele

Gemäß einem Ausführungsbeispiel weist die Richtungsinformation zumindest eine der folgenden auf: eine Richtungsänderung, eine Vorwärtsrichtung, eine Rückwärtsrichtung. Auf diese Weise kann eine eindeutige und zuverlässige Richtungsinformation erhalten werden, z.B. für eine Stromrichtung (eines Fehlerstrom-Ereignisses).

Gemäß einem Ausführungsbeispiel weist zumindest einer der Schwellwerte das Betragsmaximum (insbesondere einen Extremwert wie ein Maximum oder ein Minimum) des Nullsystemenergie-Verlaufs in dem definierten Zeitbereich auf. Im vorliegenden Kontext kann das Betragsmaximum der höchste Betrag des Nullsystemenergie-Verlaufs (in dem definierten Zeitbereich) sein (also positiv oder negativ bzw. ein Maximum oder ein Minimum). Der Nullsystemenergie-Verlauf kann eine Mehrzahl von Extremwerten aufweisen, wobei dies Maxima und/oder Minima sein können. Hierbei kann sich stets ein Extremwert identifizieren lassen, welcher einen höheren Betrag als die anderen Extremwerte aufweist und dann als Betragsmaximum verwendet werden kann.

Gemäß einem Ausführungsbeispiel weist zumindest einer der Schwellwerte den Endwert des Nullsystemenergie-Verlaufs in dem definierten Zeitbereich auf. Im vorliegenden Kontext kann der Endwert dem zeitlich gesehen letzten Wert bzw. Wertebereich des definierten Zeitbereichs entsprechen. In einem konkreten Ausführungsbeispiel kann der letzte Wert des vorliegenden Nullsystemenergie-Verlaufs betrachtet werden. Bei dem Endwert muss es sich nicht zwingend um einen Extremwert handeln.

Gemäß einem Ausführungsbeispiel weist das Evaluieren der Richtungsinformation ferner auf: Vergleichen des Vorzeichens von einem der zumindest zwei Schwellwerte (insbesondere dem Betragsmaximum) mit dem Vorzeichen von zumindest einem weiteren der zumindest zwei Schwellwerte (insbesondere dem Endwert). In anderen Worten, in einem exemplarischen Ausführungsbeispiel, werden das Vorzeichen des Betragsmaximums und das Vorzeichen des Endwerts miteinander verglichen. Es wurde überraschend erkannt, dass dieser einfache Ansatz zum Ermitteln der Richtungsinformation sehr zuverlässig sein kann und eine schnelle und robuste Richtungsbestimmung ermöglichen kann.

Gemäß einem Ausführungsbeispiel weist das Verfahren auf: Feststellen, im Fall, dass beide Vorzeichen positiv sind, dass die Richtungsinformation positiv ist, insbesondere eine Rückwärtsrichtung vorliegt. Gemäß einem Ausführungsbeispiel weist das Verfahren auf: Feststellen, im Fall, dass beide Vorzeichen negativ sind, dass die Richtungsinformation negativ ist, insbesondere eine Vorwärtsrichtung vorliegt. Gemäß einem Ausführungsbeispiel weist das Verfahren auf: Feststellen, im Fall, dass die Vorzeichen unterschiedlich sind, dass die Richtungsinformation uneindeutig ist.

Basierend auf dem oben beschriebenen Vorzeichen-Vergleich kann auf überraschend einfache und zuverlässige Weise eine Richtungsinformation bestimmt werden. Im Fall, dass die Vorzeichen nicht übereinstimmen sollten, kann die eindeutige Aussage getroffen werden, dass die Richtungsinformation in diesem Fall nicht zuverlässig bestimmt werden kann. Eine solche Aussage ist sicherlich deutlich wertvoller als eine unerkannte Falschaussage.

In einem exemplarischen Ausführungsbeispiel kann die berechnete Nullsystemenergie $E_0(t)$ über zwei Wege betrachten werden. Einmal kann die Nullsystemenergie je Wiederzündung ausgewertet werden. Andernfalls kann die Nullsystemenergie mehrerer Wiederzündungen zusammengefasst werden (hier kann z.B. lediglich das Vorzeichen betrachtet werden). Nachfolgend wird sich auf die Auswertung einer jeweiligen Wiederzündung bezogen. Dies setzt eine Prüfung des Nullspannungsverlaufes voraus. Die Größenordnung der ermittelten Nullsystemenergie $E_o(t)$ ist unter anderem von der Netzgröße abhängig. Zusätzlich beeinflussen die Spannungsparameter bei Wiederzündung die Nullsystemenergie maßgeblich.

Gemäß einem Ausführungsbeispiel weist das Verfahren auf: Normieren der Nullsystemenergie, insbesondere Verwenden der normierten Nullsystemenergie für das Evaluieren. In einem Beispiel kann zur Vereinfachung eine Normierung der berechneten Nullsystemenergie anhand des Betragsmaximums erfolgen. Die normierte Nullsystemenergie $e_0(t)$ nimmt z.B. Werte im Bereich $-1$ p.u. $\leq eo(t) \leq 1$ p.u. an und ermöglicht damit die Verwendung statischer Schwellwerte zur Auswertung des Energievorzeichens. Allgemein kann die Erdschlussrichtung dann anhand des Vorzeichens der Nullsystemenergie ermittelt werden. Es gilt z.B.:

$$\text{Positive Energie } e_0(t) > 0 \text{ Erdschluss rückwärts,}$$

$$\text{Negative Energie } e_0(t) < 0 \text{ Erdschluss vorwärts.}$$

Die bezogene Nullsystemenergie eo(t) kann aufgrund der Ausgleichsvorgänge bei Wiederzündung Schwingungen aufweisen. Die bezogene Nullsystemenergie kann gleichzeitig positive als auch negative Energiewerte beinhalten. Dies bedingt einen Vergleich mit zwei Schwellwerten und weitere Bedingungen. Somit kann z.B. definiert werden: ein oberer und ein unterer Scheitelwert, die jeweils in positiver und negativer Richtung gültig sind. Eine sich ergebende Bedingung kann sein, dass das Vorzeichen des Maximums bzw. Minimums, welches zum Betragsmaximum $e_{0\_max}$ führt, mit dem Vorzeichen der normierten Energie zum Ende der Integration (Zeitpunkt $t_{int}$) übereinstimmen muss. In anderen Worten: das Betragsmaximum weist dasselbe Vorzeichen (sgn) auf wie der Endwert:

$$\text{sgn}[e_{0\_max}] = \text{sgn}[e_0(t_{int})].$$

Anhand dieser Bedingung (siehe auch die Diskussion der Grenzwert-Bedingungen unten) kann der Nullsystemenergie-Verlauf bewertet werden. Sind die Bedingungen erfüllt, kann die Erdschlussrichtung anhand des Energievorzeichens bestimmt werden. Dabei kann das Vorzeichen des Maximum/Minimums $e_{0\_max}$, welches zum Betragsmaximum führt, und/oder der Endwert $e_0(t_{int})$ genutzt werden. Es gilt dann:

$$\text{Erdschluss vorwärts: sgn}[e_{0\_max}] \text{ und/oder sgn}[e_0(t_{int})] = -1$$

$$\text{Erdschluss rückwärts: sgn}[e_{0\_max}] \text{ und/oder sgn}[e_0(t_{int})] = 1.$$

Gemäß einem Ausführungsbeispiel weist das Bestimmen des Nullsystemenergie-Verlaufs auf: Berechnen des Nullsystemenergie-Verlaufs basierend auf einem Nullspannung-Verlauf (bzw. Nullspannung-Schwingungsverlauf) und einem Nullstrom-Verlauf (bzw. Nullstrom-Schwingungsverlauf) in dem definierten Zeitbereich. In etablierter Weise kann somit zuverlässig die Nullsystemenergie berechnet werden. Dies kann insbesondere vorteilhaft sein, wenn Nullspannung/Nullstrom ohnehin gemessen/erfasst werden, so dass im Wesentlichen kein zusätzlicher Aufwand entsteht.

In einem exemplarischen Beispiel werden zur Berechnung der Nullsystemenergie die Nullspannung $u_0$ und der Nullstrom $i_o$ benötigt. Aufgrund von inneren Asymmetrien und durch Kopplungen zwischen den Außenleitern kann es auch im fehlerfreien Zustand zu Spannungen und Strömen im Nullsystem kommen. In Abhängigkeit der Netzkonfiguration kann in Bezug auf geschlossen betriebene Ringstrukturen bzw. in vermaschten Netzen der betriebliche Nullstrom berücksichtigt werden. Die betrieblichen Nullströme können hier zu einer Überlagerung mit den fehlerbedingten Ströme führen. Folglich kann in vielen Fällen eine Korrektur des Nullstromes notwendig sein. Es wird davon ausgegangen, dass sich der betrieblich bedingte Nullstrom bei Erdschluss nicht ändert. Zur Korrektur wird der Vorfehlerzustand ausgewertet. Die Periode des Nullstromes im Vorfehlerzustand wird für den Zeitbereich des intermittierenden Erdschlusses extrapoliert. Durch Differenzbildung des gemessenen Nullstromes und des extrapolierten Kreisstromes kann der durch den intermittierenden Erdschluss begründete Stromanteil abgeschätzt werden. Im Fall von Stichleitungen bzw. radialen Strukturen kann von einer Nullstromkorrektur abzuraten sein.

Aus Nullspannung uo und Nullstrom io kann unter Verwendung nachfolgender Ausdrücke die Energie im Nullsystem $E_0$ (t) ermittelt werden. Im Zeitbereich t $[t_{res}, t_{int}]$ können die folgenden Ausdrücke angewendet werden:

$$p_0(t) = u_0(t) * i_0(t)$$

$$P_0(t) = 1/T \int_{t-\tau}^{t} p0(\tau)d\tau$$

$$E_0(t) = \int_{0}^{t} P0(\tau)d\tau$$

Die Ermittlung der Nullsystemenergie $E_0(t)$ erfolgt in diesem Beispiel je Wiederzündung. Der Zeitbereich ist damit dynamisch durch Erkennung der Wiederzündungen vorzugeben.

Gemäß einem Ausführungsbeispiel weist der definierte Zeitbereich ein unvorhergesehenes/anomales Ereignis auf. Gemäß einem Ausführungsbeispiel weist der definierte Zeitbereich ein Fehlstrom-Ereignis, insbesondere ein Erdschluss-Ereignis und/oder ein Wiederzündung-Ereignis auf. Ein solches Ereignis kann mittels einer Vielzahl von Methoden im Schwingungsverlauf ermittelt werden. Bevorzugt kann der Zeitbereich besonders akkurat definiert/bestimmt/berechnet werden, denn die Grenzwerte des Zeitbereichs können entscheidend sein für das Evaluieren der Richtungsinformation (z.B. bezüglich des Endwerts).

Gemäß einem Ausführungsbeispiel weist der definierte Zeitbereich einen Ausgleichsvorgang von Nullspannung und Nullstrom auf. Gemäß einem Ausführungsbeispiel wird lediglich der Ausgleichsvorgang vor dem Ende des anomalen Ereignisses (z.B. Fehlstrom-Ereignisses) berücksichtigt. Dadurch kann die Zuverlässigkeit erhöht werden und Fehlerquellen können ausgeschlossen werden.

In einem exemplarischen Beispiel erfolgt die Berechnung der Nullsystemenergie in einem definierten Zeitfenster, das mindestens den Zeitpunkt der Wiederzündung umfasst und den Ausgleichsvorgang von Nullstrom und Nullspannung beinhaltet. Der Ausgleichsvorgang nach Verlöschen des Erdschlusslichtbogens sollte weitestgehend ausgeblendet werden. Nach Verlöschen des Erdschlusses kommt es im Nullsystem zu einem Ausschwingvorgang von Nullspannung uo und Nullstrom io. Dabei resultiert gleichermaßen eine Wirkenergie im Nullsystem, die jedoch unabhängig vom Erdschluss ist und zur Verfälschung der ermittelten Nullsystemenergie $E_0(t)$ bei Wiederzündung führen kann. Der Ausschwingvorgang nach Verlöschen des Erdschlusslichtbogens kann somit von der Berechnung auszuschließen sein.

Gemäß einem Ausführungsbeispiel weist das Verfahren ferner auf: Bestimmen der Richtungsinformation bezüglich dem Schwingungsverlauf für zumindest zwei unterschiedliche definierte Zeitbereiche. Gemäß einem Ausführungsbeispiel weist das Verfahren ferner auf: Vergleichen der bestimmten Richtungsinformationen. Auf diese Weise kann die Zuverlässigkeit erhöht werden. Die Richtungsinformation kann z.B. über einen größeren Zeitraum betrachtet werden und die Richtungsinformationen mehrerer Evaluationen können verglichen werden.

In einem Beispiel wird mit jeder Wiederzündung eine Richtungsinformation generiert. Diese wird z.B. in einen Zwischenspeicher abgelegt. Eine einmalige Änderung bzw. Abweichung gegenüber vorheriger Richtungsinformationen wird von der Ausgabe unterdrückt. Erst wenn mindestens zwei aufeinander folgende Richtungsmeldungen identisch sind, wird eine Ausgabe der Richtungsmeldung auf Basis des Zwischenspeichers aktualisiert. Dies gilt jedoch nicht für den Beginn der Auswertung (initiale Richtungsmeldung), sondern für folgende Wiederzündungen. Die Unterdrückung von einzeln auftretenden Richtungsinformation kann zur Stabilisierung der Richtungsmeldung führen.

Gemäß einem Ausführungsbeispiel weist das Verfahren auf: Vergleichen von zumindest einem Schwellwert mit einem vorbestimmten Grenzwert. Gemäß einem Ausführungsbeispiel weist das Verfahren auf: Feststellen, basierend auf dem Vergleichen, ob der zumindest eine Schwellwert für das Bestimmen der Richtungsinformation geeignet ist. Gemäß einem Ausführungsbeispiel weist der vorbestimmte Grenzwert einen Endwert-Grenzwert und/oder einen Betragsmaximum-Grenzwert auf.

Gemäß einem Ausführungsbeispiel liegt der Endwert-Grenzwert im Bereich 0,4 bis 0,6 p.u, insbesondere 0.45 p.u. bis 0.55 p.u. (0.5 p.u. kann bevorzugt sein). Gemäß einem Ausführungsbeispiel liegt der Betragsmaximum-Grenzwert im Bereich 0,6 bis 1 p.u., insbesondere 0.7 p.u. bis 0.9 p.u. (0.8 p.u. kann bevorzugt sein).

Gemäß einem Ausführungsbeispiel ist der Betrag des Endwert-Grenzwerts kleiner als der Betrag des Betragsmaximum-Grenzwerts. Gemäß einem Ausführungsbeispiel ist ein Endwert für das Bestimmen der Richtungsinformation geeignet, wenn der Betrag des Endwerts größer ist als der Betrag des Endwert-Grenzwerts.

In einem Beispiel wird der Endwert der Nullsystemenergie $e_0(t_{int})$ mit einem unterem Schwellwert $e_{thres\_low}$ verglichen. Der Betrag des Endwertes $|e_0(t_{int})|$ muss dabei größer als der untere Schwellwert $e_{thres\_low}$ sein:

$$\left|e_0(t_{int})\right| > e_{thres\_low.}$$

Gemäß einem Ausführungsbeispiel ist ein Betragsmaximum für das Bestimmen der Richtungsinformation geeignet, wenn der Betrag des Betragsmaximums größer ist als der Betrag des Betragsmaximum-Grenzwerts.

Gemäß einem Ausführungsbeispiel ist ein Betragsmaximum für das Bestimmen der Richtungsinformation geeignet, wenn der Betrag eines weiteren Extremwerts, welcher ein anderes Vorzeichen als das Betragsmaximum aufweist, kleiner ist als der Betrag des Betragsmaximum-Grenzwerts.

Aufgrund der Schwingung der Nullsystemenergie können auch lokale Maxima $e_{0max\ n}$ vorhanden sein, deren Vorzeichen sich vom Vorzeichen des Energiewertes unterscheidet, welcher das Betragsmaximum $e_{0\_max}$ kennzeichnet. Diese zusätzlichen Maxima mit entgegengesetztem Vorzeichen $sgn[e_{0max\ n}] \neq sgn[e_{0\_max}]$ werden mit einem oberen Betragsmaximum-Grenzwert $e_{thres\_high}$ verglichen. Es kann gelten:

$$|e_{0max\ n}| < e_{thres\_high}$$

Ist diese Bedingung nicht erfüllt, kann die ermittelte Nullsystemenergie in einem Beispiel eine deutliche Neigung zu Schwingungen aufweisen und für eine eindeutige Richtungsmeldung ungeeignet sein.

Gemäß einem Ausführungsbeispiel bezieht sich die Richtungsinformation auf eine Stromrichtung, insbesondere auf die Stromrichtung bei einem Fehlstrom, insbesondere einem Erdschluss, weiter insbesondere einer Wiederzündung. Gemäß einem Ausführungsbeispiel wird das Verfahren bezüglich einer Erdung, insbesondere einer Sternpunkt-Erdung, weiter insbesondere einer Resonanz-Sternpunkt-Erdung, verwendet.

Gemäß einem exemplarischen Ausführungsbeispiel wird ausgegangen von einem Erdschluss in einem Netz mit Resonanz-Sternpunkt-Erdung. Dabei wird die Nullspannung direkt erfasst/gemessen oder über die Leiter-Größen ermittelt. Der Erdschluss ist jedoch nicht stationär und nach Abklingen der transienten Anteile im Fehlerstrom erlischt der Fehlerlichtbogen selbstständig. Es resultiert ein Ausgleichsvorgang wie oben beschrieben. Bei Wiederzündung kommt es erneut zu einen Ausgleichsvorgang von Nullstrom und -Spannung, einem initialen Erdschlusseintritt vergleichbar. Diesen kann es dann zur Erzeugung der Richtungsinformation zu bewerten gelten. Zunächst wird eine zeitliche Eingrenzung der Wiederzündung vorausgesetzt. Der eingegrenzte Zeitbereich sollte dabei den Zeitpunkt der Wiederzündung umfassen. Der Bereich des Ausschwingvorganges sollte gleichzeitig nur im geringen Maße beinhaltet sein. Die Vorgabe des Zeitbereichs kann durch verschiedene Verfahren erfolgen. Der Zeitbereich t $[t_{res}, t_{int}]$ wird hier als gegeben angenommen.

Die Generation einer erdschlussbezogenen Richtungsinformation beinhaltet in einem Beispiel zwei wesentliche Schritte: Berechnung der Nullsystemenergie aus dem Nullstrom und der Nullspannung in einem definierten Zeitbereich, und Generierung einer Richtungsinformation auf Basis der Nullsystemenergie durch einen mehrfachen Vergleich mit Schwellwerten und Größen des Zeitverlaufs.

Es ist zu beachten, dass Ausführungsformen der Erfindung unter Bezugnahme auf verschiedene Gegenstände beschrieben wurden. Insbesondere wurden einige Ausführungsformen unter Bezugnahme auf Verfahrensansprüche beschrieben, während andere Ausführungsformen unter Bezugnahme auf Vorrichtungsansprüche beschrieben wurden. Ein Fachmann wird jedoch aus dem Vorstehenden und der folgenden Beschreibung entnehmen, dass, sofern nicht anders angegeben, neben jeder Kombination von Merkmalen, die zu einer Art von Gegenstand gehören, auch jede Kombination von Merkmalen, die sich auf verschiedene Gegenstände beziehen, als von diesem Dokument offenbart gilt. Dies insbesondere auch zwischen Merkmalen der Verfahrensansprüche und Merkmalen der Vorrichtungsansprüche.

Die oben definierten Aspekte und weitere Aspekte der vorliegenden Erfindung ergeben sich aus den nachstehend zu beschreibenden Beispielen der Ausführungsformen und werden unter Bezugnahme auf die Beispiele der Ausführungsformen erläutert. Die Erfindung wird im Folgenden unter Bezugnahme auf Ausführungsformen, auf die die Erfindung jedoch nicht beschränkt ist, näher beschrieben.

Kurze Beschreibung der Zeichnungen

Figur 1 zeigt einen Nullspannung-Schwingungsverlauf mit anomalen Ereignissen, um welche bestimmte Zeitbereiche definiert sind, gemäß einem exemplarischen Ausführungsbeispiel der Erfindung.

Figur 2 zeigt einen Nullstrom-Schwingungsverlauf mit anomalen Ereignissen, um welche bestimmte Zeitbereiche definiert sind, gemäß einem exemplarischen Ausführungsbeispiel der Erfindung.

Figur 3 zeigt einen Nullsystemenergie-Verlauf in einem der definierten Zeitbereich, gemäß einem exemplarischen Ausführungsbeispiel der Erfindung.

Figur 4 zeigt einen Nullsystemenergie-Verlauf, wobei ein Fehlstrom in Vorwärtsrichtung vorliegt, gemäß einem exemplarischen Ausführungsbeispiel der Erfindung.

Figur 5 zeigt einen Nullsystemenergie-Verlauf 120, wobei ein Fehlstrom in Rückwärtsrichtung vorliegt, gemäß einem exemplarischen Ausführungsbeispiel der Erfindung.

Figur 6 zeigt eine Resonanz-Sternpunkt-Erdung-Vorrichtung bei einem Erdschluss.

Figur 7 zeigt eine Ersatzschaltung eines intermittierenden Erdschlusses in einem symmetrischen Komponentensystem einer Resonanz-Sternpunkt-Erdung-Vorrichtung.

Figur 8 zeigt einen Resonanzkreis in einem Nullsystem einer Resonanz-Sternpunkt-Erdung-Vorrichtung.

Figur 9 zeigt einen Nullspannung-Schwingungsverlauf bei Verstimmung und Dämpfung.

Figuren 10 bis 12 zeigen das Verhalten einer Leiter-Erde-Spannung nach Verlöschen eines Erdschlusses bei Verstimmung und Dämpfung.

Figur 13 zeigt einen Nullspannung-Schwingungsverlauf eines wiederzündenden Erdschlusses und Figur 14 zeigt einen korrespondierenden Nullstrom-Schwingungsverlauf.

Detaillierte Beschreibung der Zeichnungen

Die Darstellung in den Zeichnungen sind schematisch. Es wird darauf hingewiesen, dass in unterschiedlichen Abbildungen ähnliche oder identische Elemente oder Merkmale mit den gleichen Bezugzeichen oder mit Bezugzeichen versehen sind, die sich von den entsprechenden Bezugzeichen nur innerhalb der ersten Ziffer unterscheiden. Um unnötige Wiederholungen zu vermeiden, werden Elemente oder Merkmale, die bereits in Bezug auf eine zuvor beschriebene Ausführungsform erläutert wurden, an einer späteren Stelle der Beschreibung nicht noch einmal erläutert.

Darüber hinaus werden räumlich relative Begriffe wie "vorne" und "hinten", "oben" und "unten", "links" und "rechts" usw. verwendet, um die Beziehung eines Elements zu einem anderen Element zu beschreiben, wie in den Abbildungen dargestellt. So können die räumlich relativen Begriffe auf verwendete Orientierungen zutreffen, die von der in den Abbildungen dargestellten Orientierung abweichen. Offensichtlich beziehen sich diese räumlich relativen Begriffe lediglich auf eine Vereinfachung der Beschreibung und die in den Abbildungen gezeigte Orientierung und sind nicht notwendigerweise einschränkend, da eine Vorrichtung gemäß einer Ausführungsform der Erfindung andere Orientierungen als die in den Abbildungen dargestellten annehmen kann, insbesondere wenn sie verwendet wird.

Bevor die Zeichnungen im Detail beschrieben werden, wird im Folgenden anschaulich ein exemplarisches Ausführungsbeispiel der Erfindung beschrieben.

Das vorliegende Verfahren bestimmt die Nullsystemenergie über Nullspannung und -Strom. Die Ermittlung erfolgt nur im jeweiligen Zeitbereich des aktiven Erdschlusses. Damit werden nur die Ausgleichsvorgänge der Wiederzündung bewertet und die ermittelte Nullsystemenergie umfasst nur Anteile, die einen Erdschluss aufweisen. Ausgleichsvorgänge nach Ende des Erdschlusses führen zu einem Energiebeitrag und zur Verfälschung des Signals bei Wederzündung. Durch Ermittlung der Nullsystemenergie im Zeitbereich des aktiven Erdschlusses wird der Ausschwingvorgang nach Ende des Erdschlusses aktiv ausgeblendet. In vermaschten Netzen bzw. bei geschlossen betriebenen Ringstrukturen können betrieblich bedingte Kreisströme (Nullströme) resultieren. Bei Berechnung der Nullsystemenergie gehen die betrieblichen Nullströme in den Energieverlauf ein und können den Energiewert stark beeinflussen. Durch Korrektur des Nullstromes wird der Einfluss reduziert.

Die Größe der Nullsystemenergie ist abhängig von der Netzgröße (Äquivalent kapazitiver Erdschlussstrom), der Netzspannung, den Bedingungen bei Wiederzündung (Wiederkehrende Spannung, Ladung der Kapazitäten) und ob der jeweilige Abgang vom intermittierenden Fehler betroffen ist oder nicht. Dies bedingt eine Normierung der Nullsystemenergie mit sich selbst. Hierzu wird das Betragsmaximum verwendet. Es ergeben sich Werte der bezogenen Nullsystemenergie im Bereich $-1$ p.u. $< eo(t) < 1$ p.u.

Die Vorgabe und Auswertung anhand eines Parametersatzes wird möglich. Eigenfrequente Ausgleichsvorgänge in Nullspannung und -Strom resultieren in möglichen Schwingungen der Nullsystemenergie. Durch Verwendung eines oberen und unteren Schwellwertes sowie eines Vergleichskriteriums erfolgt die Prüfung des Verlaufes der bezogenen Nullsystemenergie auf Eignung zur Generation einer Richtungsinformation. Ein nicht eindeutiger Zeitverlauf führt damit zu keiner Richtungsmeldung. Falsche Richtungsmeldungen werden unterdrückt.

Der Energiewert, der zum Betragsmaximum führt, und der Endwert der Nullsystemenergie müssen in diesem Beispiel das gleiche Vorzeichen aufweisen. Es können bei der Nullsystemenergie mehrere Maxima/Minima auftreten. Die Maxima/Minima, die dem Energiewert bei Betragsmaximum ein entgegengesetztes Vorzeichen aufweisen, müssen unterhalb des oberen Schwellwertes liegen. Es ist dienlich den oberen Schwellwert $e_{thres\_high}$ mit 0,7... 0.9 p.u. anzusetzen (geeignet $e_{thres\_high}$: 0.8 p.u.). Der Endwert der Nullsystemenergie verweist auf die Richtung des intermittierenden Erdschlusses. Hierzu muss der Endwert einen Mindestwert aufweisen. Der Abgleich erfolgt über den unter Schwellwert $e_{thres\_low}$ im Bereich 0,4...0,6 p. u. anzusetzen (geeignet $e_{thres\_low}$ = 0,5 p. u.).

Nach Prüfung auf Eignung des Verlaufs der bezogenen Nullsystemenergie ergibt sich die Richtungsinformation des intermittierenden Erdschlusses auf Basis des Vorzeichens. Der Endwert der Nullsystemenergie verweist auf die Richtung. Eine positive Energiewert zeigt einen Fehlstrom in Rückwärtsrichtung an, wohingegen ein negativer Energiewert einen Fehlstrom in Vorwärtsrichtung kennzeichnet. In Abhängigkeit der Fehlerbedingungen kann die ermittelte Nullsystemenergie einen kleinen Betrag aufweisen. Durch zusätzliche stochastische Einflüsse sind einmalig auftretende Abweichungen möglich. Eine Stabilisierung der Ausgabemeldung unterdrückt einmalig auftretende Richtungsänderungen.

Das Verfahren erkennt auf Basis der Nullsystemenergie des intermittierenden Fehlers bei Wiederzündung die Erdschlussrichtung und erzeugt eine von drei möglichen Richtungsmeldungen: Vorwärts, Rückwärts und ohne Meldung.

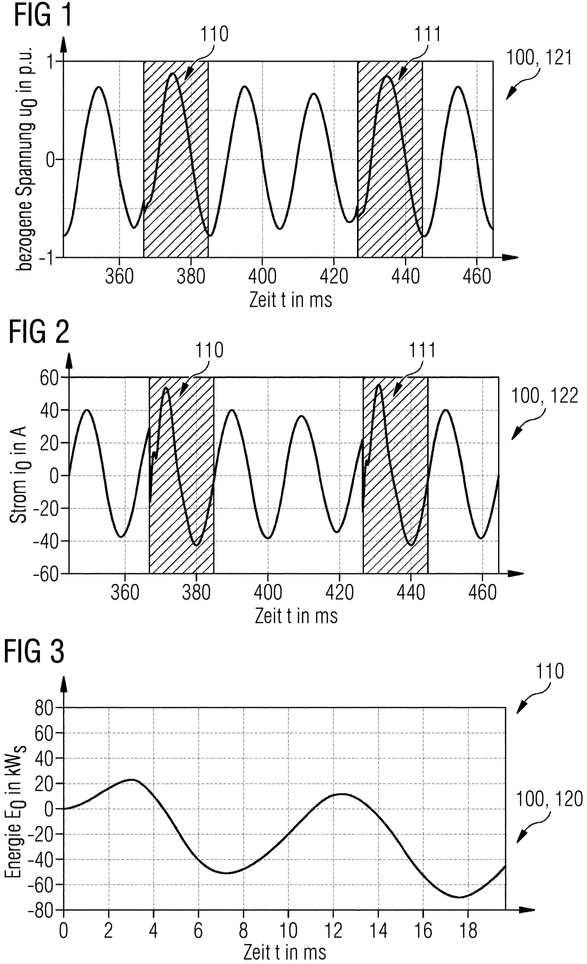

**Figur 1** zeigt einen Nullspannung-Schwingungsverlauf 121 mit anomalen Ereignissen, um welche bestimmte Zeitbereiche 110, 111 definiert sind, gemäß einem exemplarischen Ausführungsbeispiel der Erfindung. Gezeigt ist die Nullspannung $u_0$ normiert in p.u. (1 bis -1) im zeitlichen Verlauf (Millisekunden). In dem gezeigten Schwingungsverlauf treten zwei unerwartete Ereignisse auf, um die dann jeweils ein bestimmter Zeitbereich 110, 111 definiert wurde. Im spezifischen Beispiel handelt es sich bei diesen Ereignissen um Erdschlüsse bzw. Wiederzündungen.

**Figur 2** zeigt einen Nullstrom-Schwingungsverlauf 122 mit anomalen Ereignissen, um welche bestimmte Zeitbereiche 110, 111 definiert sind, gemäß einem exemplarischen Ausführungsbeispiel der Erfindung. Gezeigt ist der Nullstrom io in Ampere im zeitlichen Verlauf (Millisekunden). Der zeitliche Verlauf entspricht jenem der Nullspannung 121 von Figur 1 und die Zeitbereiche 110, 111 der anomalen Ereignisse sind dieselben wie für das Beispiel der Figur 1.

**Figur 3** zeigt einen Nullsystemenergie-Verlauf 120 in einem der definierten Zeitbereiche 110 der Figuren 1 und 2, gemäß einem exemplarischen Ausführungsbeispiel der Erfindung. Die Nullsystemenergie $E_0$ wird in kWs über die Zeit gezeigt, hier 20 Millisekunden wie für den definierten Zeitbereich 110 der Figuren 1 und 2 vorgesehen. Der Nullsystemenergie-Verlauf 120 kann aus dem Nullspannung-Schwingungsverlauf 121 und dem Nullstrom-Schwingungsverlauf 122 berechnet werden.

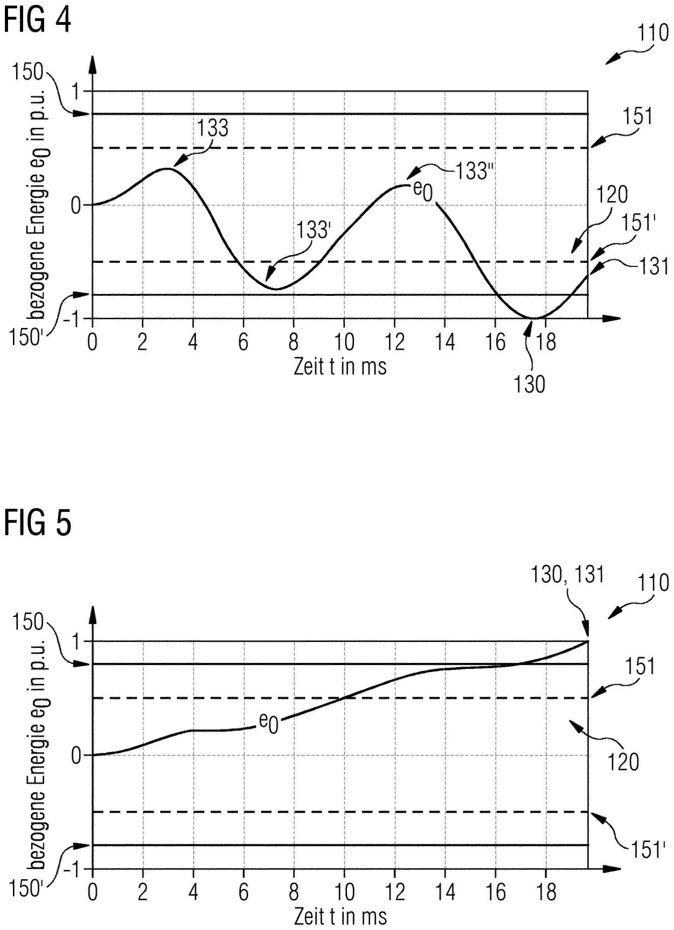

**Figur 4** zeigt einen Nullsystemenergie-Verlauf 120, wobei ein Fehlstrom in Vorwärtsrichtung vorliegt, gemäß einem exemplarischen Ausführungsbeispiel der Erfindung. Der gezeigte Nullsystemenergie-Verlauf 120 weist zwei Maxima 133, 133" und zwei Minima 133', 130 auf, wobei das zeitlich letzte Minimum das Betragsmaximum 130 ist. Ferner weist der Nullsystemenergie-Verlauf 120 am zeitlich gesehen letzten Punkt einen Endwert 131 auf.

Folgende Grenzwerte wurden in diesem Beispiel gesetzt:

i) ein oberer 150 und ein unterer 150' Betragsmaximum-Grenzwert bei 0,8 bzw. -0,8 p.u.; und

ii) ein oberer 151 und ein unterer 151' Endwert-Grenzwert bei 0,5 bzw. -0,5 p.u..

Der Betrag des Endwert-Grenzwerts 151, 151' ist kleiner als der Betrag des Betragsmaximum-Grenzwerts 150, 150'.

Der Betrag des Endwerts 131 ist größer als der entsprechende Betrag des Endwert-Grenzwerts 151, 151' (-0,65 zu -0,5), und damit für das Bestimmen der Richtungsinformation geeignet.

Der Betrag des Betragsmaximums 130 ist größer als der Betrag des entsprechenden Betragsmaximum-Grenzwerts 150, 150' (-1 zu -0,8), und damit für das Bestimmen der Richtungsinformation geeignet.

Die weiteren Maxima 133, 133' haben ein anderes Vorzeichen als das Betragsmaximum 130. Jedoch sind die Beträge dieser Maxima 133, 133' (als weitere Extremwerte) jedoch geringer als der Betrag des entsprechenden Betragsmaximum-Grenzwerts 150, 150' (0,2 bzw. 0,3 zu 0,8). Damit ist das Betragsmaximum 130 für das Bestimmen der Richtungsinformation geeignet.

Ein Vergleichen des Vorzeichens von dem Betragsmaximum 130 (negativ) mit dem Vorzeichen des Endwerts 131 (negativ) ergibt, dass beide Vorzeichen negativ sind, und somit eine negative Richtungsinformation bzw. eine Vorwärtsrichtung des Fehlstroms vorliegt. Im Ergebnis kann zuverlässig ausgesagt werden, dass ein Erdschluss bzw. eine Wiederzündung in Vorwärtsrichtung vorliegt.

**Figur 5** zeigt einen Nullsystemenergie-Verlauf 120, wobei ein Fehlstrom in Rückwärtsrichtung vorliegt, gemäß einem exemplarischen Ausführungsbeispiel der Erfindung.

Der gezeigte Nullsystemenergie-Verlauf 120 ist stetig ansteigend und daher fallen Betragsmaximum 130 und Endwert 131 zusammen. Die für Figur 4 detailliert beschriebenen Grenzwerte werden hier ebenfalls verwendet. Der Endwert 131 liegt über dem Endwert-Grenzwert 151 und kein weiterer Extremwert (neben dem Betragsmaximum 130) liegt oberhalb des Betragsmaximum-Grenzwert 150. Damit sind das Betragsmaximum 130 und der Endwert 131 für das Bestimmen der Richtungsinformation geeignet.

Ein Vergleichen des Vorzeichens von dem Betragsmaximum 130 (positiv) mit dem Vorzeichen des Endwerts 131 (positiv) ergibt, dass beide Vorzeichen positiv sind, und somit eine positive Richtungsinformation bzw. eine Rückwärtsrichtung des Fehlstroms vorliegt. Im Ergebnis kann zuverlässig ausgesagt werden, dass ein Erdschluss bzw. eine Wiederzündung in Rückwärtsrichtung vorliegt.

Es sei darauf hingewiesen, dass der Begriff "aufweisend" andere Elemente oder Schritte nicht ausschließt und die Verwendung des Artikels "ein" eine Vielzahl nicht ausschließt. Auch Elemente, die in Verbindung mit verschiedenen Ausführungsformen beschrieben werden, können kombiniert werden. Es ist auch darauf hinzuweisen, dass Bezugszeichen in den Ansprüchen nicht so ausgelegt werden sollten, dass sie den Umfang der Ansprüche einschränken.

Unabhängig vom grammatikalischen Geschlecht eines bestimmten Begriffs sind Personen männlicher, weiblicher oder anderer Geschlechteridentität mit umfasst.

**Patentansprüche**

1. Ein Verfahren zum Bestimmen einer Richtungsinformation bezüglich einem Schwingungsverlauf (100), das Verfahren aufweisend:

Definieren eines Zeitbereichs (110) des Schwingungsverlaufs (100);
Bestimmen eines Nullsystemenergie-Verlaufs (120) bezüglich des Schwingungsverlaufs (100) in dem definierten Zeitbereich (110); und
Evaluieren der Richtungsinformation bezüglich dem Schwingungsverlauf (100) basierend auf zumindest zwei Schwellwerten (130, 131) des Nullsystemenergie-Verlaufs (120) in dem definierten Zeitbereich (110).

2.  Das Verfahren gemäß Anspruch 1, wobei die Richtungsinformation zumindest eine der folgenden aufweist:

    eine Richtungsänderung,
    eine Vorwärtsrichtung,
    eine Rückwärtsrichtung.

3.  Das Verfahren gemäß einem der vorhergehenden Ansprüche, wobei zumindest einer der Schwellwerte das Betragsmaximum (130), insbesondere ein Maximum oder ein Minimum, des Nullsystemenergie-Verlaufs (120) in dem definierten Zeitbereich (110) aufweist.

4.  Das Verfahren gemäß einem der vorhergehenden Ansprüche, wobei zumindest einer der Schwellwerte den Endwert (131) des Nullsystemenergie-Verlaufs (120) in dem definierten Zeitbereich (110) aufweist.

5.  Das Verfahren gemäß einem der vorhergehenden Ansprüche, wobei das Evaluieren der Richtungsinformation ferner aufweist:
Vergleichen des Vorzeichens von einem der zumindest zwei Schwellwerte, insbesondere dem Betragsmaximum (130), mit dem Vorzeichen von zumindest einem weiteren der zumindest zwei Schwellwerte, insbesondere dem Endwert (131).

6.  Das Verfahren gemäß Anspruch 5, ferner aufweisend zumindest eines der folgenden Merkmale:

    Feststellen, im Fall, dass beide Vorzeichen positiv sind, dass die Richtungsinformation positiv ist, insbesondere eine Rückwärtsrichtung vorliegt;
    Feststellen, im Fall, dass beide Vorzeichen negativ sind, dass die Richtungsinformation negativ ist, insbesondere eine Vorwärtsrichtung vorliegt;
    Feststellen, im Fall, dass die Vorzeichen unterschiedlich sind, dass die Richtungsinformation uneindeutig ist.

7.  Das Verfahren gemäß einem der vorhergehenden Ansprüche, wobei das Bestimmen des Nullsystemenergie-Verlaufs (120) aufweist:
Berechnen des Nullsystemenergie-Verlaufs (120) basierend auf einem Nullspannung-Verlauf (121) und einem Nullstrom-Verlauf (122) in dem definierten Zeitbereich (110).

8.  Das Verfahren gemäß einem der vorhergehenden Ansprüche, wobei der definierte Zeitbereich (110) ein Fehlstrom-Ereignis, insbesondere ein Erdschluss-Ereignis, weiter insbesondere ein Wiederzündung-Ereignis, aufweist.

9.  Das Verfahren gemäß einem der vorhergehenden Ansprüche,

    wobei der definierte Zeitbereich (110) einen Ausgleichsvorgang von Nullspannung und Nullstrom aufweist, und wobei lediglich der Ausgleichsvorgang vor dem Ende des Fehlstrom-Ereignisses berücksichtigt wird.

10. Das Verfahren gemäß einem der vorhergehenden Ansprüche, ferner aufweisend:

    Bestimmen der Richtungsinformation bezüglich dem Schwingungsverlauf (100) für zumindest zwei unterschiedliche definierte Zeitbereiche (110, 111); und
    Vergleichen der bestimmten Richtungsinformationen.

11. Das Verfahren gemäß einem der vorhergehenden Ansprüche, ferner aufweisend zumindest eines der folgenden Merkmale:

    Vergleichen von zumindest einem Schwellwert (130, 131) mit einem vorbestimmten Grenzwert (150, 151);
    Feststellen, basierend auf dem Vergleichen, ob der zumindest eine Schwellwert (130, 131) für das Bestimmen der Richtungsinformation geeignet ist;
    wobei der vorbestimmte Grenzwert einen Endwert-Grenzwert (151, 151') und/oder einen Betragsmaximum-Grenzwert (150, 150') aufweist;

wobei der Endwert-Grenzwert (151, 151') im Bereich 0,4 bis 0,6 p.u. liegt;

wobei der Betragsmaximum-Grenzwert (150, 150') im Bereich 0,6 bis 1 p.u. liegt;

wobei der Betrag des Endwert-Grenzwerts (151, 151') kleiner ist als der Betrag des Betragsmaximum-Grenzwerts (150, 150');

wobei ein Endwert (131) für das Bestimmen der Richtungsinformation geeignet ist, wenn der Betrag des Endwerts größer ist als der Betrag des Endwert-Grenzwerts (151, 151');

wobei ein Betragsmaximum (130) für das Bestimmen der Richtungsinformation geeignet ist, wenn der Betrag des Betragsmaximums (130) größer ist als der Betrag des Betragsmaximum-Grenzwerts (150, 150');

wobei ein Betragsmaximum (130) für das Bestimmen der Richtungsinformation geeignet ist, wenn der Betrag eines weiteren Extremwerts (133), welcher ein anderes Vorzeichen als das Betragsmaximum (130) aufweist, kleiner ist als der Betrag des Betragsmaximum-Grenzwerts (150, 150').

12. Das Verfahren gemäß einem der vorhergehenden Ansprüche,
wobei sich die Richtungsinformation auf eine Stromrichtung bezieht, insbesondere auf die Stromrichtung bei einem Fehlerstrom, insbesondere einem Erdschluss, weiter insbesondere einer Wiederzündung.

13. Das Verfahren gemäß einem der vorhergehenden Ansprüche,
wobei das Verfahren bezüglich einer Erdung, insbesondere einer Sternpunkt-Erdung, weiter insbesondere einer Resonanz-Sternpunkt-Erdung, verwendet wird.

14. Eine Vorrichtung zur Datenverarbeitung, die eingerichtet ist das Verfahren nach einem der vorhergehenden Ansprüche 1 bis 13 auszuführen.

15. Eine Energievorrichtung (200), insbesondere aufweisend ein Schutzgerät, die zumindest eine Vorrichtung zur Datenverarbeitung gemäß Anspruch 14 aufweist.

## FIG 1

## FIG 2

## FIG 3

FIG 4

FIG 5

**FIG 6**

**FIG 7**

**FIG 8**

## FIG 9

## FIG 10

## FIG 11

## FIG 12

FIG 13

FIG 14

Europäisches
Patentamt
European
Patent Office
Office européen
des brevets

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2018/011135 A1 (AEBERSOLD ANDREAS [CH]) 11. Januar 2018 (2018-01-11) * Absatz [0019] * * Absatz [0052] * * Absatz [0054] * * Absatz [0059] - Absatz [0062] * * Absatz [0065] * * Absatz [0084] * ----- | 1-15 | INV. G06F30/367 G01R31/52 ADD. G01R31/42 H02H3/16 G06F113/04 G06F119/02 |
| A | EP 3 213 381 B1 (ARCTEQ RELAYS OY [FI]) 16. September 2020 (2020-09-16) * Anspruch 11 * * Absatz [0025] - Absatz [0026] * * Absatz [0032] * * Absatz [0034] * * Absatz [0036] * * Absatz [0041] * ----- | 1-15 | |
| A | DE 199 01 789 B4 (SIEMENS AG [DE]) 15. Januar 2004 (2004-01-15) * Absatz [0022] * * Absatz [0027] - Absatz [0028] * * Anspruch 1 * ----- | 1-15 | **RECHERCHIERTE SACHGEBIETE (IPC)** G06F G01R H02H |

Der vorliegende Recherchenbericht wurde für alle Patentansprüche erstellt

| Recherchenort | Abschlußdatum der Recherche | Prüfer |
|---|---|---|
| München | 24. Januar 2025 | Sohrt, Wolfgang |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
...........................................................................
& : Mitglied der gleichen Patentfamilie, übereinstimmendes
    Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 24 19 5162

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

24-01-2025

| Im Recherchenbericht angeführtes Patentdokument | Datum der Veröffentlichung | Mitglied(er) der Patentfamilie | | Datum der Veröffentlichung |
|---|---|---|---|---|
| US 2018011135 A1 | 11-01-2018 | CN | 107408812 A | 28-11-2017 |
| | | EP | 3046197 A1 | 20-07-2016 |
| | | ES | 2665815 T3 | 27-04-2018 |
| | | HU | E038513 T2 | 29-10-2018 |
| | | JP | 6646066 B2 | 14-02-2020 |
| | | JP | 2018503837 A | 08-02-2018 |
| | | NO | 3046197 T3 | 18-08-2018 |
| | | PL | 3046197 T3 | 31-08-2018 |
| | | US | 2018011135 A1 | 11-01-2018 |
| | | WO | 2016112470 A1 | 21-07-2016 |
| EP 3213381 B1 | 16-09-2020 | EP | 3213381 A1 | 06-09-2017 |
| | | ES | 2830048 T3 | 02-06-2021 |
| | | FI | 125428 B | 15-10-2015 |
| | | WO | 2016066898 A1 | 06-05-2016 |
| DE 19901789 B4 | 15-01-2004 | KEINE | | |

EPO FORM P0461

Für nähere Einzelheiten zu diesem Anhang : siehe Amtsblatt des Europäischen Patentamts, Nr.12/82